# EUROPEAN PATENT APPLICATION

(11) **EP 1 342 654 A2**
(43) Date of publication of application: **10.09.2003**
(21) Application number: 03005133.8
(22) Date of filing: 07.03.2003
(51) Int. Cl.: B62K 23/04, B62J 39/00, B62M 25/04

(54) **Shift operating apparatus for a bicycle**

(30) Priority: 08.03.2002 CN 02106973
(71) Applicant: Shimano Inc., Sakai-shi, Osaka (JP)
(72) Inventor: Irie, Yoshinori, Osakasayama-shi, Osaka (JP)
(74) Representative: GROSSE BOCKHORNI SCHUMACHER

(57) **Abstract**

A bicycle shift operating apparatus 20 comprising a fixing member 22 attached to a handlebar 10 of a bicycle, and a shift operating lever 24 supported by the fixing member 22 to be rotatable about an axis R of rotation substantially parallel to a longitudinal axis X of the handlebar to effect up-shift or down-shift operations. The shift operating lever comprises a hub portion 48, a first operating portion 50, a second operating portion 52 and a speed-stage indicator 54. Each of the first and second operating portions is adapted for causing the shift operating lever 24 to rotate about the axis of rotation. The first operating portion 50 extends outwardly from the hub portion 48, and the second operating portion 52 extends outwardly from the hub portion 48 in a direction opposite to the first operating portion 50. Preferably, a longitudinal direction of the first operating portion 50 is not parallel to a longitudinal direction of the second operating portion 52, and an operating surface 60 of the first operating portion 50 is connected to an operating surface 62 of the second operating portion 52 by a curved surface. A speed-stage displaying member 90 is supported by the fixing member 22 in close proximity to the shift operating lever 24 for cooperating with the speed-stage indicator 54 to indicate one of a plurality of speed stages selected by the rotation of the shift operating lever 24. Preferably, the speed-stage indicator 54 is located immediately near the speed-stage displaying member. In one embodiment, the speed-stage indicator 54 extends outwardly from the hub portion 48 between the first and second operating portions in a direction of the axis R of rotation. In another embodiment, the speed-stage indicator 54 is a recess 54' formed in the hub portion 48.

## Description

### BACKGROUND OF THE INVENTION

### 1. Field of the Invention

This invention relates generally to a shift operating apparatus for a bicycle and, in particular, to a bicycle shift operating apparatus comprising a shift operating lever having a speed-stage indicator for indicating one of a plurality of speed stages selected by the rotation of the shift operating lever.

### 2. Description of the Prior Art

Japanese Utility Model Laid-Open Publication No. Heil-157092 discloses a bicycle shift operating apparatus that is attached to a handlebar of a bicycle and can be operated to effect up-shift and down-shift operations by using only the thumb of a rider's hand without removing the hand from gripping the handlebar.

While such a shift operating apparatus can be conveniently operated by a rider by simply extending his thumb without having to remove his hand away from the handlebar, the apparatus did not provide with any means to indicate the current speed stage. Consequently, when the shift operating apparatus is used with a derailleur having a great number of speed stages, for example seven speed stages, a rider may not be sure or may simply forget what the current speed stage is and hence is not sure how many steps and/or in which direction the shift operating apparatus should be operated in order to effect an intended up-shift or down-shift operation. Furthermore, with the prior art shift operating apparatus, a rider has to rely on his personal experience or feeling instead of a tangible indication to determine that the desired speed stage is achieved after he operates the shift operating apparatus.

On the other hand, many types of bicycle speed-stage indicator are known, such as the one disclosed in U.S. Patent No. 5,601,001. In general, however, these known bicycle speed-stage indicators are relatively complicated in structure. In order to have any of these known speed-stage indicators work with a bicycle shift operating apparatus, a relatively large number of components of the speed-stage indicator and/or the shift operating apparatus have to be specially or intricately designed and/or many additional components have to be used. This inevitably increases the cost.

In view of the above, there exits a need for a bicycle shift operating apparatus that is provided with a speed-stage indicator having a simple structure and hence overcomes the problems of prior art mentioned above.

### SUMMARY OF THE INVENTION

An object of the present invention is therefore to provide a bicycle shift operating apparatus that not only can be operated by a rider conveniently during riding but also, with a simple structure, allows the rider to easily know and clearly see the current speed stage, how many steps and in which direction the shift operating apparatus should be operated in order to effect an intended up-shift or down-shift operation and the resulted speed stage after the operation of the apparatus.

The above object of the present invention can be achieved basically by providing a bicycle shift operating apparatus comprising a fixing member attached to a handlebar of a bicycle, and a shift operating lever supported by the fixing member to be rotatable about an axis of rotation substantially parallel to a longitudinal axis of the handlebar to effect up-shift or down-shift operations. The shift operating lever comprises a hub portion, a first operating portion, a second operating portion and a speed-stage indicator. The shift operating lever is rotatably supported by the fixing member through the hub portion. Each of the first and second operating portions is adapted for causing the shift operating lever to rotate about the axis of rotation. The first operating portion extends outwardly from the hub portion, and the second operating portion extends outwardly from the hub portion in a direction opposite to the first operating portion.

Preferably, a longitudinal direction of the first operating portion is not parallel to a longitudinal direction of the second operating portion, and an operating surface of the first operating portion is connected to an operating surface of the second operating portion by a curved surface.

A speed-stage displaying member may be supported by the fixing member in close proximity to the shift operating lever for cooperating with the speed-stage indicator to indicate one of a plurality of speed stages selected by the rotation of the shift operating lever.

Preferably, the speed-stage indicator is located immediately near the speed-stage displaying member.

Preferably, the speed-stage displaying member is arranged on an outer peripheral surface of a cap member covering an end face of the hub portion.

In one embodiment, the speed-stage indicator extends outwardly from the hub portion between the first and second operating portions in a direction of the axis of rotation.

In another embodiment, the speed-stage indicator is a recess formed in the hub portion.

The above and other objects, features, aspects and advantages of the present invention will become apparent to those skilled in the art from the following detailed description, which, taken in conjunction with the accompanying drawings, discloses embodiments of the present invention.

### BRIEF DESCRIPTION OF THE DRAWINGS

Figure 1 shows a shift operating apparatus according to a particular embodiment of the invention attached to a handlebar of a bicycle on each side of a handlebar stem.
Figure 2 is an exploded view showing the structure of the shift operating apparatus of Figure 1.
Figure 3 is a view, similar to Figure 1, for explaining one of the manners to operate the shift operating apparatus shown in Figures 1 and 2.
Figure 4 shows a state where the shift operating apparatus shown in Figures 1 to 3 has been operated and accordingly a speed-stage indicator thereof points to the number 7 on a speed-stage displaying member.
Figure 5 shows a state where the shift operating apparatus shown in Figures 1 to 3 has been operated and accordingly the speed-stage indicator thereof points to the number 1 on the speed-stage displaying member.
Figure 6 shows another embodiment of the shift operating apparatus according to the invention.

### DETAILED DESCRIPTION OF THE EMBODIMENTS

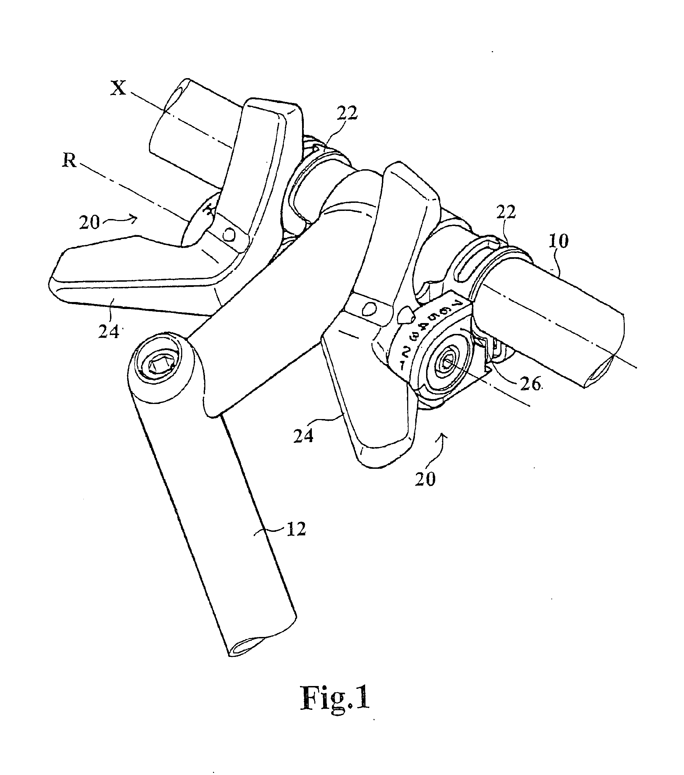

A particular embodiment of a bicycle shift operating apparatus 20 according to the present invention will be described in the following with reference to Figures 1 to 5.

As shown in Figure 1, the shift operating apparatus 20 is attached to a handlebar 10 of a bicycle on each side of a handlebar stem 12. The shift operating apparatus 20 on the right hand side of the stem 12 (i.e., the right hand side in Figure 1) is used for up-shift and down-shift operations of a rear derailleur having seven speed stages, while the shift operating apparatus 20 on the left hand side of the stem 12 (i.e., the left hand side in Figure 1) is used for up-shift and down-shift operations of a front derailleur having three speed stages, for example. Since it will be apparent to those skilled in the art from this disclosure that the front and rear shift operating apparatuses 20 are substantially identical to each other except for certain elements associated with the number of speed stages, the following description is directed to the rear shift operating apparatus 20 on the right hand side of the stem 12.

As shown in Figure 1, the shift operating apparatus 20 includes a fixing member 22 for attachment to the handlebar 10 having a longitudinal axis X, and a shift operating lever 24 supported by the fixing member 22 to be rotatable about an axis of rotation R substantially parallel to the longitudinal axis X of the handlebar 10. The shift operating apparatus 20 also includes a cap member 26 fixedly supported by the fixing member 22 for covering an end face of the shift operating lever 24 and a position-maintaining mechanism disposed inside of the shift operating lever 24, as will be described in detail later.

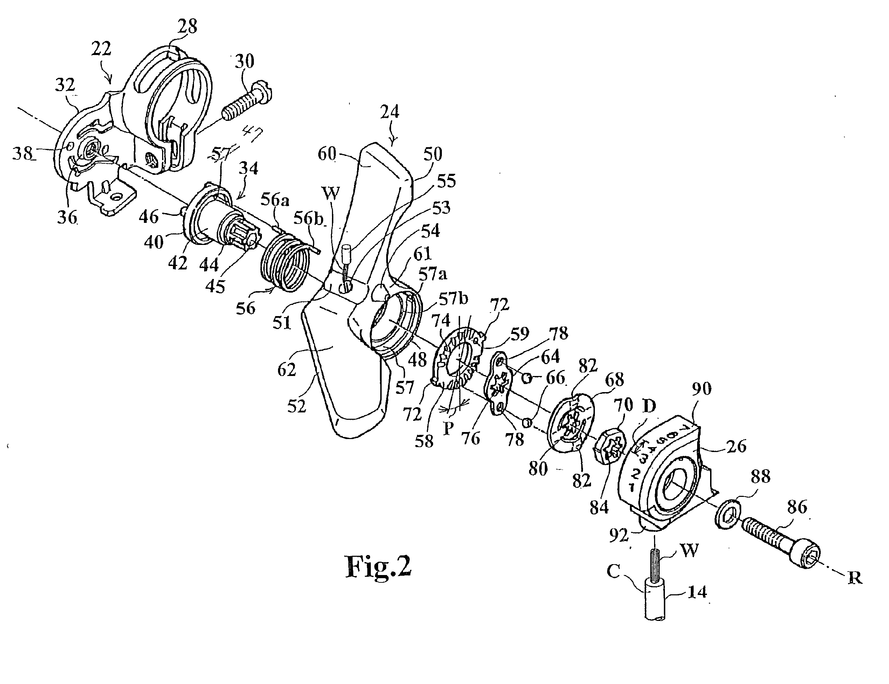

As shown in Figure 2, the fixing member 22 includes a fixing band 28 for attachment to the handlebar 10 by a tightening screw 30, and a bracket 32 integrally formed with the fixing band 28 for rotatably supporting the shift operating lever 24 through a unit bush 34. The bracket 32 is provided with a threaded mounting hole 36 at a central portion thereof and a plurality of engaging holes 38 surrounding the threaded mounting hole 36. The unit bush 34 has a base portion 40, a shaft portion 42, a serrated portion 44 and a central through hole 45. The base portion 40 is provided on a bottom surface thereof with a plurality of engaging projections 46 adapted to engage in the plurality of engaging holes 38 of the bracket 32, respectively. As will be described in detail later, the unit bush 34 is fixedly mounted to the bracket 32 with the projections 46 engaging in the holes 38.

The shift operating lever 24 includes a substantially cylindrical hub portion 48, a first operating portion 50, a second operating portion 52 and a speed-stage indicator 54. The shift operating lever 24 is rotatably supported by the bracket 32 of the fixing member 22 on the unit bush 34 through the hub portion 48. A spring 56 is disposed between an outer surface of the shaft portion 42 of the unit bush 34 and an inner surface of the hub portion 48 of the shift operating lever 24. One end 56a of the spring 56 is inserted into a hole 47 formed in an upper annular surface of the base portion 40 of the unit bush 34, and the other end 56b of the spring 56 is inserted into a hole 59 formed in a positioning plate 58 of the position-maintaining mechanism described later.

The first operating portion 50 of the shift operating lever 24 extends outwardly from the hub portion 48. The first operating portion 50 has a first operating surface 60. A pushing force exerted on the first operating surface 60 of the first operating portion 50 causes the shift operating lever 24 to rotate about the axis of rotation R. The second operating portion 52 of the shift operating lever 24 extends outwardly from the hub portion 48 in a direction opposite to the first operating portion 50. The second operating portion 52 has a second operating surface 62 such that a pushing force exerted on the second operating surface 62 also causes the shift operating lever 24 to rotate about the axis of rotation R.

Preferably, in this embodiment, the extending (i.e., longitudinal) direction of the first operating portion 50 is not parallel to the extending (i.e., longitudinal) direction of the second operating portion 52. More specifically, while the longitudinal direction of the first operating portion 50 is substantially perpendicular to the axis of rotation R, the longitudinal direction of the second operating portion 52 is inclined with respect to the axis of rotation R. Furthermore, in this embodiment, the first operating surface 60 of the first operating portion 50 is connected to the second operating surface 62 of the second operating portion 52 by a substantially smoothly curved surface except for a slightly recessed groove 51 therebetween (the function of which will be described later). These arrangements in configuration facilitate the operation of the shift operating lever 24.

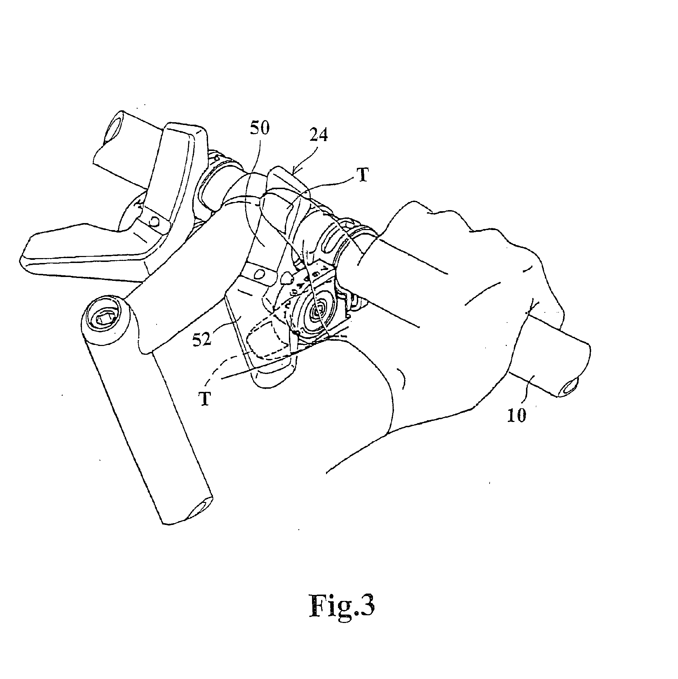

More specifically, as shown in Figure 3, the shift operating lever 24 of the shift operating apparatus 20 of the invention may be conveniently operated by using only the thumb T of a rider's hand without removing the hand from gripping the handlebar 10. That is, the rider can just extend his thumb naturally to operate the first operating portion 50 or the second operating portion 52 of the shift operating lever 24 to effect up-shift or down-shift operations without having to remove his hand away from the handlebar 10 or uncomfortably stretch the thumb T, even when the shift operating apparatus 20 is used with a derailleur having a great number of speed stages (e.g., seven speed stages). Of course, it will be apparent to those skilled in the art from this disclosure that the manner to operate the shift operating apparatus 20 is not limited to the one shown in Figure 3 and described above. For example, it is also effective that the rider uses his forefinger to push an opposite surface of the first operating surface 60 to cause the shift operating lever 24 to rotate.

Referring back to Figure 2, in this embodiment, the speed-stage indicator 54 of the shift operating lever 24 is in a form of a projection extending outwardly from an end face 61of the hub portion 48 between the first and second operating portions 50 and 52 in the direction of the axis of rotation R. As will be described later, the speed-stage indicator 54 is provided to indicate one of the seven speed stages selected by the rotation of the shift operating lever 24. It will be apparent to those skilled in the art from this disclosure that the exact shape of the protruded speed-stage indicator 54 is not critical to the invention.

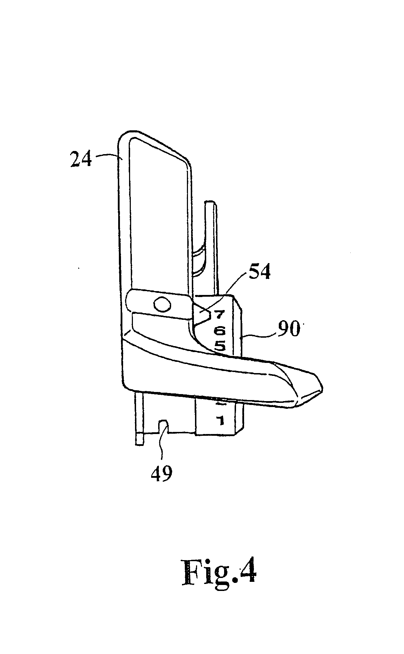

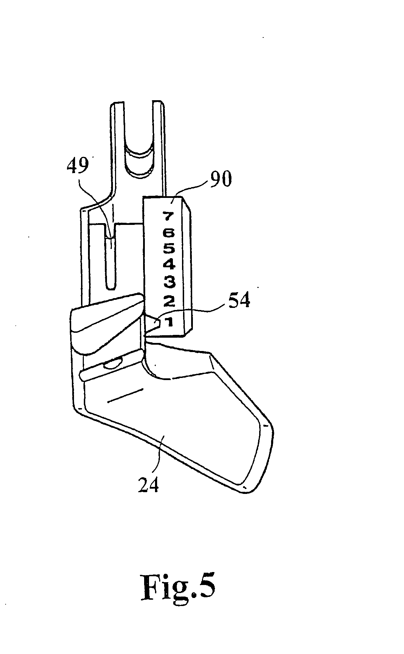

The hub portion 48 of the shift operating lever 24 also serves as a winding member for winding an inner wire W of a shift cable 14. For this purpose, a winding slot 49 (Figures 4 and 5) is formed in an outer peripheral surface of the hub portion 48. After winding in the winding slot 49 around a part of the hub portion 48, the inner wire W of the shift cable 14 enters into the hub portion 48 and is terminated at a stopper 55 fitted in a hole 53 formed in the groove 51 between the first and second operating surfaces 60 and 62.

Now, the position-maintaining mechanism for maintaining the shift operating lever 24 at a position corresponding to one of the seven speed stages selected by the rotation of the shift operating lever 24 will be described. The position-maintaining mechanism is disposed inside of the hub portion 48 of the shift operating lever 24 and includes an annular positioning plate 58, a ball supporting plate 64, two balls 66, a spring plate 68 and a nut 70. The positioning plate 58 has a pair of diametrically-opposed lugs 72 protruding radially outwardly from the annular body of the plate 58. The lugs 72 are configured to be fitted in corresponding notches 57a formed in an annular stepped portion 57 protruded radially inwardly from an inner peripheral surface of the hub portion 48 of the shift operating lever 24 so that the positioning plate 58 is positioned at the stepped portion 57 against an inner annular abutment portion 57b of the hub portion 48 when assembled and rotates with the shift operating lever 24 when the shift operating lever 24 is operated for rotation about the axis of rotation R. On each side of the lugs 72, seven positioning slots 74 extending radially are provided in an edge portion of the annular body of the positioning plate 58 facing away from the bracket 32 of the fixing member 22 with a circumferential pitch P around the axis of rotation R. Also, the positioning plate 58 is provided with the above-mentioned hole 59 for receiving the end 56b of the spring 56.

The ball supporting plate 64 is provided at a central portion thereof with a serrated opening 76 for mating with the serrated portion 44 of the unit bush 34, and at each of two elongated ends thereof with a ball receiving hole 78 for receiving the ball 66. The ball supporting plate 64 is configured such that, when assembled, the ball 66 received in the ball receiving hole 78 can be positioned in the positioning slot 74 of the positioning plate 58. Every two diametrically-opposed positioning slots 74 work as a pair for receiving the pair of balls 66. The spring plate 68 is also provided at a central portion thereof with a serrated opening 80 for mating with the serrated portion 44 of the unit bush 34. The spring plate 68 is used to bias the balls 66 received in the ball receiving holes 78 of the ball supporting plate 64 towards the positioning slots 74 of the positioning plate 58. For this purpose, the spring plate 68 is provided at each part thereof corresponding to the ball receiving hole 78 of the ball supporting plate 64 with a slightly raised portion 82 for accommodating the ball 66. The nut 70 has a serrated central opening 84 for mating with the serrated portion 44 of the unit bush 34. The nut 70 is used to prohibit the movement of the positioning plate 58, the ball supporting plate 64 and the spring plate 68 along the axis of rotation R, when assembled, by abutting against the spring plate 68 with one surface thereof and against an inner portion (not shown) of the cap member 26 described below with the other surface thereof.

The cap member 26 covers the end face 61 of the hub portion 48 so that the position-maintaining mechanism described above is housed inside of the hub portion 48. A screw 86 passes through a center hole of a washer 88, a center hole of the cap member 26 and the through hole 45 of the unit bush 34 whose serrated portion 44 passes through the serrated opening 76 of the ball supporting plate 64, the serrated opening 80 of the spring plate 68 and the serrated opening 84 of the nut 70 in the hub portion 48. Then, the screw 86 screws into the threaded mounting hole 36 of the bracket 32 of the fixing member 22. In this manner, the cap member 26 and hence the nut 70, the spring plate 68, the ball supporting plate 64 and the unit bush 34 are all fixedly supported by the bracket 32 of the fixing member 22, leaving only the shift operating lever 24 and the positioning plate 58 being movable members.

In this embodiment, preferably, the cap member 26 includes a speed-stage displaying member 90 for cooperating with the speed-stage indicator 54 of the shift operating lever 24 to indicate one of the seven speed stages selected by the rotation of the shift operating lever 24. The speed-stage displaying member 90 is arranged on an outer peripheral surface of the cap member 26 at such a position that, when the cap member 26 having the speed-stage displaying member 90 is fixedly supported in place by the bracket 32 of the fixing member 22 with the screw 86, the speed-stage displaying member 90 is located in close proximity to the shift operating lever 24, and even more preferably, the speed-stage indicator 54 of the shift operating lever 24 is located immediately near the speed-stage displaying member 90, as shown in Figures 1 and 3.

The speed-stage displaying member 90 bears thereon numbers 1 to 7 in sequence, representing the seven speed stages selectable by the rotation of the shift operating lever 24, respectively. The seven numbers also sequentially correspond to the seven pairs of positioning slots 74 of the positioning plate 58 with a circumferential distance D between any two consecutive numbers corresponding to the circumferential pitch P between two adjacent positioning slots 74. The position of the speed-stage displaying member 90 about the axis of rotation R may be adjusted while tightening the screw 86 so that the speed-stage indicator 54 correctly points to the number itself instead of the gap between two adjacent numbers.

The cap member 26 is provided at a bottom portion thereof with an outer casing stop 92 for connecting with an outer casing C of the shift cable 14 so that the inner wire W of the shift cable 14 passes through the outer casing stop 92 into the cap member 26. Then, as mentioned above, the inner wire W of the shift cable 14 winds in the winding slot 49 around the hub portion 48 of the shift operating lever 24 and enters into the hub portion 48 to be terminated at the stopper 55.

Next, the operation of the shift operating apparatus 20 with the above structure will be described. As shown in Figure 3 and as mentioned above, a rider whose right hand, for example, is gripping the handlebar 10 of the bicycle during riding can operate the shift operating apparatus 20 of the invention by simply extending his right hand's thumb to push the first operating portion 50 or the second operating portion 52 of the shift operating lever 24 to effect up-shift or down-shift operations. Since the speed-stage indicator 54 is located immediately near the speed-stage displaying member 90 by the simple structure as described above, the rider can easily know and clearly see the current speed stage, how many steps and in which direction the shift operating lever 24 should be rotated in order to effect an intended up-shift or down-shift operation and the resulted speed stage after the rotation of the shift operating lever 24.

For example, assuming that the speed-stage indicator 54 points to the number 4 on the speed-stage displaying member 90 initially, this means that the present speed stage is the fourth speed stage, i.e., the middle speed stage among the seven speed stages available, and the balls 66 received in the ball receiving holes 78 of the ball supporting plate 64 are biased by the spring plate 68 to be positioned in the middle pair of positioning slots 74 among the seven pairs of positioning slots 74 of the positioning plate 58. If the rider intends to increase the speed of the bicycle, all he has to do is to push, with his thumb for example, the first operating portion 50 of the shift operating lever 24 with a force capable of overcoming the biasing force of the spring plate 68 exerted on the balls 66. Then, the shift operating lever 24 can be rotated as desired. This is because the positioning plate 58 is fixed to the shift operating lever 24 as described above, and therefore, the positioning plate 58 is urged to rotate by the force which is exerted with an intention to rotate the shift operating lever 24. The rotation of the positioning plate 58 under the force capable of overcoming the biasing force of the spring plate 68 causes the balls 66 positioned in the middle pair of positioning slots 74 to be forced out of the slots 74 against the biasing force of the spring plate 68, thereby enabling the shift operating lever 24 and the positioning plate 58 to rotate together freely. Once the shift operating lever 24 and the positioning plate 58 rotate by an amount corresponding to the pitch P between two adjacent positioning slots 74, which means that a next adjacent pair of positioning slots 74 comes into alignment with the ball receiving holes 78 of the ball supporting plate 64, the balls 66 will be biased by the spring plate 68 to be positioned into the next adjacent pair of positioning slots 74 of the positioning plate 58. This generates a resistance against the rotation of the positioning plate 58 and hence the rotation of the shift operating lever 24 such that the rider is aware that the next higher speed stage is reached and releases the force exerted on the first operating portion 50 of the shift operating lever 24. At this time, i.e., after the above up-shift operation, the speed-stage indicator 54 points to the number 5 on the speed-stage displaying member 90 because the circumferential distance D between any two consecutive numbers on the speed-stage displaying member 90 is set to correspond to the pitch P between two adjacent positioning slots 74 as described above.

Further up-shift or down-shift operations can be effected in a similar manner. Figure 4 shows a state where the shift operating lever 24 has been operated to set the bicycle speed at the seventh speed stage and accordingly the speed-stage indicator 54 exactly points to the number 7 on the speed-stage displaying member 90. Figure 5 shows a state where the bicycle speed has been set at the first speed stage as the speed-stage indicator 54 clearly points to the number 1 on the speed-stage displaying member 90.

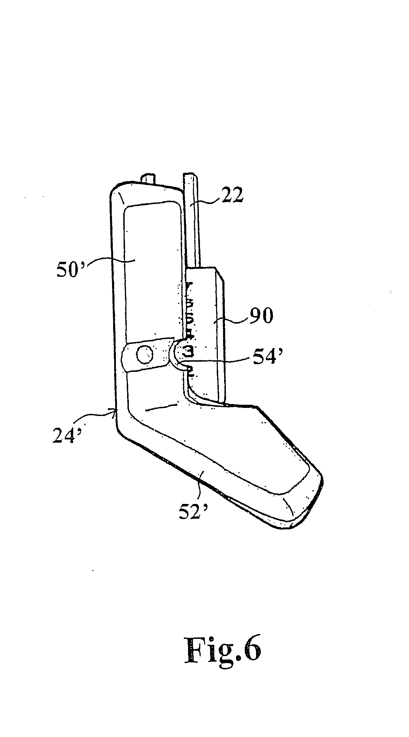

Figure 6 shows the fixing member 22, the shift operating lever 24' and the speed-stage displaying member 90 of another embodiment of the shift operating apparatus according to the invention. This embodiment is different from the previous embodiment shown in Figures 1 to 5 only in that the speed-stage indicator is in a form of a recess instead of a projection.

As shown in Figure 6, a part of the hub portion where the first and second operating portions 50' and 52' extend outwardly and the first operating portion 50' are made wider than those of the previous embodiment shown in Figures 1 to 5 by extending in a direction towards the speed-stage displaying member 90. The extended portion thus overhangs the speed-stage displaying member 90 disposed in close proximity to the shift operating lever 24' as mentioned in the previous embodiment. Thus, the numbers on the speed-stage displaying member 90 are at least partially blocked by the overhanging portion from the rider's visual access. A recess 54' serving as a speed-stage indicator is formed in the overhanging portion of the hub portion of the shift operating lever 24'. The recess 54' is configured such that one of the numbers 1 to 7 on the speed-stage displaying member 90 corresponding to one of seven speed stages selected by the rotation of the shift operating lever 24' is fully exposed to the rider's vision through the recess 54'. Thus, with this simple structure, the rider can easily know and clearly see the current speed stage, how many steps and in which direction the shift operating lever 24' should be rotated in order to effect an intended up-shift or down-shift operation and the resulted speed stage after the rotation of the shift operating lever 24'.

Since other parts of this embodiment and functions and operations thereof are the same as those of the previous embodiment shown in Figures 1 to 5, the description for these parts is omitted herein.

It will be apparent to those skilled in the art from the above disclosure that the shift operating apparatus 20 of the invention may be used with a derailleur having any number of speed stages (e.g., three speed stages) by simply replacing the positioning plate 58 and the speed-stage displaying member 90 with a positioning plate having the desired number of pairs of positioning slots (e.g., three pairs of positioning slots) and a speed-stage displaying member bearing the corresponding number of scales (e.g., numbers 1 to 3). It will be also apparent to those skilled in the art from the above disclosure that the speed-stage displaying member 90 may be a separate member from the cap member 26 provided that the separate speed-stage displaying member is disposed in close proximity to the shift operating lever or disposed such that the speed-stage indicator is immediately near the speed-stage displaying member.

Hence, while only two embodiments have been chosen to illustrate the present invention, it will be apparent to those skilled in the art from this disclosure that various changes and modifications can be made herein without departing from the scope of the invention as defined in the appended claims. Furthermore, the forgoing description of the embodiments according to the present invention is provided for illustration only, and not for the purpose of limiting the invention as defined by the appended claims and their equivalents.

## Claims

1. A shift operating apparatus (20) for a bicycle comprising:
a fixing member (22) attached to a handlebar (10) of the bicycle; and
a shift operating lever (24) supported by said fixing member to be rotatable about an axis of rotation (R) substantially parallel to a longitudinal axis (X) of said handlebar to effect up-shift or down-shift operations, said shift operating lever (24) comprising:
a hub portion (48) through which said shift operating lever is rotatably supported by said fixing member (22);
a first operating portion (50) for causing said shift operating lever to rotate about said axis of rotation, wherein said first operating portion extends outwardly from said hub portion (48);
a second operating portion (52) for causing said shift operating lever to rotate about said axis of rotation, wherein said second operating portion extends outwardly from said hub portion (48) in a direction opposite to said first operating portion (50); and
a speed-stage indicator (54).

2. A shift operating apparatus according to claim 1, wherein a longitudinal direction of said first operating portion (50) is not parallel to a longitudinal direction of said second operating portion (52).

3. A shift operating apparatus according to claim 1, wherein an operating surface (60) of said first operating portion (50) is connected to an operating surface (62) of said second operating portion (52) by a curved surface.

4. A shift operating apparatus according to claim 1, further comprising a speed-stage displaying member (90) supported by said fixing member (22) in close proximity to said shift operating lever (24) for cooperating with said speed-stage indicator (54) to indicate one of a plurality of speed stages selected by rotation of said shift operating lever.

5. A shift operating apparatus according to claim 4, wherein said speed-stage indicator (54) is located immediately near said speed-stage displaying member (90).

6. A shift operating apparatus according to claim 5, wherein said speed-stage indicator (54) extends outwardly from said hub portion (48) between said first (50) and second operating portions (52).

7. A shift operating apparatus according to claim 6, wherein said speed-stage indicator (54) extends outwardly from said hub portion (48) in a direction of said axis of rotation (R).

8. A shift operating apparatus according to claim 5, wherein said speed-stage indicator (54) is a recess formed in said hub portion (48).

9. A shift operating apparatus according to claim 5, wherein said hub portion (48) comprises a winding member for winding an inner wire (W) of a shift cable (14).

10. A shift operating apparatus according to claim 9, wherein said winding member comprises a winding slot (49) formed in an outer peripheral surface of said hub portion (48).

11. A shift operating apparatus according to claim 5, further comprising a cap member (26) fixedly supported by said fixing member (22) for covering an end face (61) of said hub portion (48).

12. A shift operating apparatus according to claim 11, wherein said speed-stage displaying member (90) is arranged on an outer peripheral surface of said cap member (26).

13. A shift operating apparatus according to claim 12, wherein said speed-stage indicator (54) is located above said speed-stage displaying member (90).

14. A shift operating apparatus according to claim 5, further comprising a position-maintaining mechanism for maintaining said shift operating lever (24) at a position corresponding to one of said plurality of speed stages selected by rotation of said shift operating lever (24), wherein said position-maintaining mechanism is disposed inside of said hub portion (48).

15. A shift operating apparatus according to claim 1, wherein said fixing member (22) comprises a fixing band (28) for attachment to said handlebar and a bracket integrally formed with said fixing band for supporting said shift operating lever (24).

16. A shift operating apparatus according to claim 4, wherein said plurality of speed stages includes at least three speed stages.

17. A shift operating apparatus according to claim 16, wherein said plurality of speed stages includes seven speed stages.
